# EUROPÄISCHE PATENTSCHRIFT

(11) **EP 3 748 216 B1**
(45) Veröffentlichungstag und Bekanntmachung des Hinweises auf die Patenterteilung: **18.01.2023**
(21) Anmeldenummer: 20177880.0
(22) Anmeldetag: 02.06.2020
(51) Int. Cl.: F16P 3/14

(54) **VORRICHTUNG UND VERFAHREN ZUR ENERGIEEFFIZIENTEN AUSFÜHRUNG EINER SICHERHEITSFUNKTION**
DEVICE AND METHOD FOR ENERGY EFFICIENT EXECUTION OF A SECURITY FUNCTION
DISPOSITIF ET PROCÉDÉ DE MISE EN UVRE ÉCONOME EN ÉNERGIE D'UNE FONCTION DE SÉCURITÉ

(30) Priorität: 03.06.2019 DE 102019114854
(43) Veröffentlichungstag der Anmeldung: 09.12.2020
(73) Patentinhaber: Pilz GmbH & Co. KG, 73760 Ostfildern (DE)
(72) Erfinder: Döttling, Dietmar, 73760 Ostfildern (DE)
(74) Vertreter: Witte, Weller & Partner Patentanwälte mbB

(56) Entgegenhaltungen:
- EP-A2- 1 965 009
- DE-B3-102008 056 508
- US-A1- 2015 049 911

## Beschreibung

Die vorliegende Erfindung betrifft eine Vorrichtung sowie ein Verfahren zur energieeffizienten Ausführung einer Sicherheitsfunktion.

Unter dem Begriff der Sicherheitsfunktion versteht man nach DIN EN ISO 13849-1 und DIN EN ISO 12100 eine sicherheitsgerichtete Steuerfunktion einer Maschine, die ein von der Maschine ausgehendes Risiko auf ein akzeptables Maß reduziert.

Zur Realisierung von Sicherheitsfunktionen wurden ursprünglich, insbesondere zur Absicherung von Gefahrenbereichen von Maschinen und industriellen Anlagen, mechanische Absperrung verwendet, die einen Zugang zur gefahrbringenden Maschine versperrten. Diese starren und unflexiblen Systeme wurden im Laufe der Zeit durch komplexere Steuerungssysteme ersetzt oder ergänzt, welche sich flexibel auf die jeweiligen Anforderungen der Maschine anpassen lassen, insbesondere auf die gesteigerten Anforderungen beim Zusammentreffen von Menschen und Maschinen.

Die komplexen Steuerungssysteme umfassen Sensoren, Aktoren sowie Kommunikations- und Steuerungseinrichtungen und sind dazu eingerichtet, eine Situation bzw. ein auslösendes Ereignis, wie bspw. das Eindringen in einen definierten Schutzraum, im Umfeld einer gefahrbringenden Maschine oder Anlage zu erfassen und eine entsprechende sicherheitsgerichtete Reaktion auszulösen. Die sicherheitsgerichtete Reaktion kann eine Steuerfunktion sein, die eine Gefahr für Menschen oder Gegenstände in der Umgebung der Maschine ausschließt oder auf ein akzeptables Maß reduziert.

Die Verwendung solcher komplexen Steuerungssysteme zum Schutz von Menschen und Personen setzt voraus, dass die Funktionsfähigkeit der Steuerungssysteme jederzeit gewährleistet und überprüfbar ist. Die Anforderungen an die einzelnen Sensoren, Aktoren sowie Kommunikations- und Steuerungseinrichtungen dieser Steuerungssysteme, auch als fehlersichere (FS)-Steuerungssysteme bezeichnet, sind somit höher als an normale Steuerungssysteme (auch als Standardsysteme bezeichnet), die eine Steuerung der Anlage oder Maschine hinsichtlich ihrer bestimmungsgemäßen Funktion bewirken. In vielen Ländern sind die Anforderungen an fehlersichere Steuerungssysteme in Normen und Richtlinien festgelegt.

Bei sicherheitsgerichteten Einrichtungen tritt zunehmend das Thema Energieeffizienz in den Vordergrund. Zahlreiche Richtlinien und Normen schreiben den Herstellern vor, ihre Produkte möglichst energiesparend auszugestalten. Beispielsweise sollen nur noch elektronische Bauteile mit möglichst wenig Verlustleistung verwendet werden und eine Energieeffizienz bereits beim grundlegenden Schaltungsdesign berücksichtigt werden. Diese allgemeinen Maßnahmen können aufgrund der steigenden Komplexität der einzelnen Sensoren für sicherheitsgerichtete Einrichtungen den steigenden Energiebedarf bestenfalls kompensieren, jedoch nur selten zu tatsächlichen Energieeinsparungen beitragen.

DE 10 2009 047 805 A1 offenbart diesbezüglich eine Standardsteuerung (SPS), die eine Reduzierung des Energieverbrauchs dadurch erreicht, indem die Steuerung einzelne Busteilnehmer an einem Bus gemeinsam oder selektiv ein- oder ausschaltet. Eine programmtechnische Realisierung hierzu findet sich bspw. in EP 2 187 281 A1. In beiden Offenbarungen sind sicherheitstechnische Aspekte jedoch nicht berücksichtigt.

EP 2 199 881 A1 und EP 2 256 566 A1 zeigen ebenfalls wie Energieeinsparungen bei Feldgeräten realisiert werden können. Hierbei wird vorgeschlagen zur Energieeinsparung Kommunikationseinheiten nur dann zu aktivieren, wenn diese benötigt werden. Eine Betrachtung unter sicherheitstechnischen Gesichtspunkten findet aber auch hier nicht statt.

EP 1 965 009 A2 zeigt ferner ein automatisches Türschließsystem, bei dem ein Sicherheitssensor in regelmäßigen Abständen aktiviert wird und im Übrigen in einem Schlafzustand verweilt, um Energie einzusparen.

Vor diesem Hintergrund ist es eine Aufgabe der vorliegenden Erfindung eine Vorrichtung und ein Verfahren zur energieeffizienten Ausführung einer Sicherheitsfunktion anzugeben, die energiesparend realisierbar sind, eine hohe Flexibilität gewährleisten und gleichzeitig eine normgerechte Absicherung einer technischen Anlage oder Maschine gewährleisten.

Gemäß einem Aspekt der vorliegenden Erfindung wird diese Aufgabe gelöst durch eine Vorrichtung zur energieeffizienten Ausführung einer Sicherheitsfunktion an einer technischen Anlage, umfassend: eine Schutzeinrichtung zur Erfassung eines auslösenden Ereignisses der Sicherheitsfunktion sowie eine Verarbeitungseinheit zur Ausführung einer sicherheitsgerichteten Reaktion der Sicherheitsfunktion in Abhängigkeit der Erfassung durch die Schutzeinrichtung, wobei die Vorrichtung in einem ersten Betriebsmodus und einem zweiten Betriebsmodus wahlweise betreibbar ist, und wobei in dem ersten Betriebsmodus die Schutzeinrichtung und/oder die Verarbeitungseinheit eingerichtet sind, gemäß einer ersten Güte das auslösende Ereignis zu erfassen und/oder die sicherheitsgerichtete Reaktion auszuführen und in dem zweiten Betriebsmodus gemäß einer zweiten Güte, wobei die zweite Güte kleiner ist als die erste Güte und in dem zweiten Betriebsmodus zur Energieeinsparung die Schutzeinrichtung und/oder die Verarbeitungseinheit mit einer verringerten Leistung betreibbar sind, wobei ein definierter Schutzraum, innerhalb dessen die Sicherheitsfunktion ausgeführt wird, variabel einstellbar ist und mindestens einen ersten Schutzraum und einen zweiten Schutzraum umfasst, und wobei die Schutzeinrichtung eingerichtet ist, in dem ersten Betriebsmodus das auslösende Ereignis in dem ersten und dem zweiten Schutzraum und in dem zweiten Betriebsmodus nur in dem ersten Schutzraum zu erfassen.

Gemäß einem weiteren Aspekt der vorliegenden Erfindung wird diese Aufgabe ferner gelöst durch eine Vorrichtung zur energieeffizienten Ausführung einer Sicherheitsfunktion an einer technischen Anlage, umfassend: eine Schutzeinrichtung zur Erfassung eines auslösenden Ereignisses der Sicherheitsfunktion sowie eine Verarbeitungseinheit zur Ausführung einer sicherheitsgerichteten Reaktion der Sicherheitsfunktion in Abhängigkeit der Erfassung durch die Schutzeinrichtung, wobei die Vorrichtung in einem ersten Betriebsmodus und einem zweiten Betriebsmodus wahlweise betreibbar ist, wobei die Verarbeitungseinheit eingerichtet ist, die sicherheitsgerichtete Reaktion in dem ersten Betriebsmodus gemäß einer ersten Güte und in dem zweiten Betriebsmodus gemäß einer zweiten Güte auszuführen, wobei die zweite Güte kleiner ist als die erste Güte, und wobei in dem zweiten Betriebsmodus zur Energieeinsparung die Verarbeitungseinheit mit einer verringerten Leistung betreibbar ist.

Grundsätzlich ist es somit eine Idee der vorliegenden Erfindung, zur Energieeinsparung einen zweiten Betriebsmodus zu implementieren, in dem die Schutzeinrichtung und/oder die Verarbeitungseinheit mit einer verringerten Leistung betrieben werden können. Im zweiten Betriebsmodus bleibt ein Teil der bestimmungsgemäßen Funktion, also das Bereitstellen einer Sicherheitsfunktion, erhalten, jedoch in einem reduzierten Umfang. Der zweite Betriebsmodus wird daher im Folgenden auch als reduzierter Betrieb bezeichnet und unterscheidet sich von einem Bereitschaftsbetrieb (Standby-Betrieb), bei dem die eigentliche Sicherheitsfunktion nicht mehr ausgeführt werden kann.

Der reduzierte Betriebsmodus zeichnet sich gegenüber einem Bereitschaftsbetrieb dadurch aus, dass eine grundlegende Absicherung der zu überwachenden Anlage gewährleistet wird, wobei ein Umfang oder die Art der Überwachung (Güte) angepasst ist, so dass die beteiligten Komponenten weniger Energie verbrauchen. Die Energieeinsparung kann durch verschiedene Maßnahmen erfolgen. Beispielsweise kann Energie eingespart werden, wenn bei Schutzeinrichtungen und/oder Verarbeitungseinheiten, die einen hohen Energiebedarf im Normalbetrieb haben, Teile der Hard- oder Software abgeschaltet werden oder mit verringerter Leistung betrieben werden.

Ferner ist es möglich, eine Überwachung auf bestimmte Räume zu begrenzen. Dies hat den Vorteil, dass eine Überwachung flexibel einstellbar ist und Energie eingespart werden kann, wenn nur ein Teil des Schutzraums überwacht werden muss.

Die Erfinder haben erkannt, dass es vorteilhaft sein kann, neben einem Normalbetrieb und einem Standby-Betrieb einen weiteren güteabhängigen Betriebsmodus zu implementieren, bei dem die Güte der Sicherheitsfunktion variabel einstellbar ist. Insbesondere ist es vorteilhaft, wenn die Güte der Sicherheitsfunktion in Abhängigkeit eines Betriebsmodus oder Zustands der überwachten Anlage einstellbar ist.

Die Güte einer Sicherheitsfunktion bezeichnet den Umfang einer Erfassung des auslösenden Ereignisses durch die Schutzeinrichtung bzw. die Möglichkeit die Erfassung zu verarbeiten und eine sicherheitsgerichtete Reaktion herbeizuführen. Da die Anforderung an eine Sicherheitsfunktion unter anderem von einem Betriebszustand der zu überwachenden Anlage abhängig sein kann, ist es möglich auch die Güte der Sicherheitsfunktion an den jeweiligen Betriebszustand variable anzupassen. So werden bspw. bei einem Produktionsstopp oder einer Ruhepause der Anlage andere Anforderungen an die Sicherheitsfunktion gestellt als bei einem Normalbetrieb. In der Regel sind bei einem Produktionsstopp die Anforderungen geringer, da sich die technische Anlage oder deren Komponenten in einem Ruhezustand befinden, von der keine oder nur geringe Gefahr ausgeht. Demgegenüber können bei einem sog. Einrichtbetrieb oder bei der Wartung der Anlage ggf. höhere Anforderungen an die Sicherheitsfunktion gestellt werden, da sich Bedienpersonal unter Umständen unmittelbar an der technischen Anlage in deren Gefahrenbereich aufhalten muss.

Es versteht sich, dass die vorstehend genannte Verknüpfung zwischen einem Betriebsmodus der technischen Anlage und Anforderungen an die Sicherheitsfunktion nur exemplarisch zu verstehen sind. Grundsätzlich kann die geforderte Güte der Sicherheitsfunktion bzw. der Variabilität von einer individuellen Sicherheitsbetrachtung abhängen, wobei weitere Parameter neben dem Betriebsmodus der technischen Anlage für die Bestimmung der geforderten Güte relevant sein können.

Durch die variable einstellbare Güte können Energieeinsparungen bei sicherheitsgerichteten Einrichtungen erreicht werden. Insbesondere in produktionsfreien Zeiten kann ohne vollständigen Verlust der Sicherheitsfunktion Energie eingespart werden. Darüber hinaus kann der reduzierte Betrieb sich auch vorteilhaft auf die Lebensdauer der Sensorik bzw. deren Wartungsintervalle auswirken und diese verlängern bzw. vergrößern. Gleichzeitig kann trotz der Einsparung auch eine normgerechte Sicherheit realisiert werden, indem der reduzierte Betrieb bei der Sicherheitsbetrachtung entsprechend berücksichtigt wird. Die eingangs genannte Aufgabe ist somit vollständig gelöst.

In einer weiteren Ausgestaltung sind die erste Güte und die zweite Güte durch eine Reaktionszeit und/oder ein Erfassungsvermögen der Schutzeinrichtung und/oder der Verarbeitungseinheit definiert, wobei in dem zweiten Betriebsmodus die Reaktionszeit und/oder das Erfassungsvermögen reduziert sind.

Reaktionszeit und Erfassungsvermögen sind zwei Parameter, welche die Güte einer Sicherheitsfunktion bestimmen können. Beispielsweise können optische Sensoren mit unterschiedlicher Auflösung betrieben werden, wobei eine verringerte Auflösung die Verarbeitung der erfassten Daten vereinfacht und mit geringerer Rechenleistung vonstattengehen kann. Auf diese Weise wird weniger Energie für die Ausführung benötigt. Ebenso kann die Rechenleistung gesenkt werden, wenn eine Reaktionszeit heraufgesetzt wird und damit mehr Zeit zur Auswertung zur Verfügung steht. Ein vermindertes Erfassungsvermögen bzw. eine verlängerte Reaktionszeit sind somit Beispiele für eine verminderte Güte, die zu einer Energieeinsparung führen können, jedoch gleichzeitig sicherheitstechnisch kompensierbar sind, wenn es die Situation der technischen Anlage erlaubt, d.h. diese sich in einem Zustand befindet, bei dem für die normgerechte Sicherheit eine verminderte Güte der Sicherheitsfunktion ausreichend ist.

In einer weiteren Ausgestaltung ist die Vorrichtung wahlweise in einem dritten Betriebsmodus betreibbar, in dem die Erfassung durch die Schutzeinrichtung und/oder die Ausführung durch die Verarbeitungseinheit deaktiviert sind.

Vorteilhaft ist die Vorrichtung somit neben dem ersten Betriebsmodus (Normalbetrieb) und dem zweiten Betriebsmodus (reduzierter Betrieb) zusätzlich in einem dritten Betriebsmodus (Bereitschaftsbetrieb oder Standby-Betrieb) betreibbar. Bei einem Bereitschaftsbetrieb ist die Funktion des Geräts vorübergehend abgeschaltet, jedoch schnell wieder aktivierbar. Einen Energieverbrauch im Bereitschaftsbetrieb ist somit noch geringer als im reduzierten Betrieb, allerdings kann der Bereitschaftsbetrieb nur bei wenigen, ausgewählten Zuständen der technischen Anlage eingenommen werden, da im Bereitschaftsbetrieb eine Sicherheit nicht gewährleistet werden kann. In der Regel kann der Bereitschaftsbetrieb nur eingenommen werden, wenn die technische Anlage abgeschaltet ist, wobei auch dies von der individuellen Sicherheitsbetrachtung abhängig ist. Grundsätzlich wird durch den weiteren Betriebsmodus, d.h. den reduzierten Betrieb, die Flexibilität beim Energiesparen weiter erhöht, wodurch weiteres Einsparpotential ausgeschöpft werden kann.

In einer weiteren Ausgestaltung umfasst die verringerte Leistung der Schutzeinrichtung und/oder der Verarbeitungseinheit eine Reduzierung der Taktfrequenz, ein Abschalten von einem oder mehreren Prozessorkernen, eine Reduzierung einer Lüfterdrehzahl und/oder ein Deaktivieren von Softwaremodulen.

Um die Leistung und damit verbunden den Energieverbrauch zu reduzieren, kann auf verschiedene und bekannte Maßnahmen zurückgegriffen werden. Vorteilhaft führt ein Absenken der Anforderung an die Sicherheitsfunktion, also das Einnehmen des zweiten Betriebsmodus, automatisch zu der gewünschten Energieeinsparung, indem die Hard- und Software in an sich bekannter Weise auf die geringeren Anforderungen reagiert. Es sind somit vorteilhaft keine oder nur geringe Hardware- und Softwareanpassungen notwendig, um Energieeinsparungen im reduzierten Betrieb zu erreichen und der Fokus kann vollständig auf die sicherheitstechnische Definition des reduzierten Betriebs und die Bestimmung der dafür notwendigen Rahmenparameter gelegt werden.

In einer weiteren Ausgestaltung sind die Schutzeinrichtung und/oder die Verarbeitungseinheit mehrkanalig ausgebildet und die verringerte Leistung der Schutzeinrichtung und/oder der Verarbeitungseinheit erfolgt durch Abschalten eines oder mehrerer Kanäle.

Üblicherweise sind sicherheitsgerichtete Einrichtungen mehrkanalig ausgelegt, um eine Redundanz zu gewährleisten. Jeder Kanal kann unabhängig von dem anderen die sicherheitsgerichtete Reaktion auslösen. Gleichzeitig kann ein Kanal vorzugsweise die Funktionsfähigkeit des jeweils anderen Kanals überprüfen. Zur Energieeinsparung kann gemäß dieser bevorzugten Ausgestaltung ein Kanal abgeschaltet werden, so dass zwar zumindest teilweise auf diese Redundanz verzichtet wird, jedoch die grundsätzliche Funktion zunächst erhalten bleibt. Indem ein Kanal komplett deaktiviert wird, verlängert sich in der sicherheitstechnischen Betrachtung die Sicherheitseinstufung, was abhängig von einer Risikoanalyse der technischen Anlage in bestimmten Situationen akzeptabel sein kann. Das Deaktivieren eines Kanals lässt sich besonders leicht realisieren, wodurch ein reduzierter Betrieb besonders einfach implementiert werden kann.

In einer weiteren Ausgestaltung ist die Vorrichtung eingerichtet, von einer separaten Steuerung einen Steuerbefehl zu erhalten und in Abhängigkeit des Steuerbefehls den ersten oder den zweiten Betriebsmodus auszuwählen.

In dieser Ausgestaltung erfolgt der Übergang zwischen den einzelnen Betriebsmodi gesteuert, d.h. die Vorrichtung erhält Information von einer übergeordneten Steuerung der technischen Anlage, den reduzierten Betrieb (oder den Bereitschaftsbetrieb) einzunehmen, bspw. bei einem Produktionsstopp oder bei einer Ruhepause. Die Information sollte über ein sicheres Bussystem oder Netzwerk übertragen werden, da ein Sicherheitsintegritätslevel der Sicherheitsfunktion verändert wird. Indem der Übergang delegiert wird, kann der reduzierte Betrieb ohne weitere Anpassung an der Schutzeinrichtung und/oder Verarbeitungseinheit realisiert werden.

In einer weiteren Ausgestaltung verfügt die Vorrichtung über Mittel, um automatisch zwischen dem ersten und dem zweiten Betriebsmodus zu wechseln.

In dieser Ausgestaltung erfolgt der Übergang zwischen den einzelnen Betriebsmodi somit automatisch, indem die Vorrichtung selbstständig erkennt, welcher Betriebsmodus in einer gegebenen Situation einzunehmen ist. Die Vorrichtung kann so flexibel und schnell reagieren und weiteres Energieeinsparpotential kann ausgeschöpft werden.

Besonders bevorzugt kann die Vorrichtung dazu eingerichtet sein, Informationen über den gewählten Betriebsmodus an andere Einrichtungen zu melden.

Auf diese Weise können sich andere Einrichtungen (sichere und nicht sichere Einrichtungen) auf den reduzierten Betrieb einstellen und entsprechend reagieren. Andere Einrichtungen können bspw. einen Weckruf senden, um die Vorrichtung aktiv in den Normalbetrieb zu versetzen, oder selbst in einen reduzierten Betrieb übergehen, um zusätzlich Energie einzusparen.

In einer weiteren Ausgestaltung weist die Schutzeinrichtung mindestens einen bildgebenden Sensor auf.

Bildgebende Sensoren können in der Regel mehr Information erfassen, als für die eigentliche Sicherheitsfunktion notwendig ist. Die weiteren Informationen können besonders vorteilhaft dafür herangezogen werden, den notwendigen Betriebsmodus selbstständig zu erkennen. Darüber hinaus ist ein bildgebender Sensor variabel einstellbar, indem sich seine Auflösung verändern lässt. Durch die Veränderung der Auflösung kann der Aufwand für die Auswertung beeinflusst werden und somit deren Energiebedarf. Auf diese Weise kann die Güte der Sicherheitsfunktion einfach und schnell über einen Einstellparameter der Schutzeinrichtung variiert werden.

In einer weiteren Ausgestaltung ist die Schutzeinrichtung dazu eingerichtet, außerhalb eines definierten Schutzraums, innerhalb dessen die Sicherheitsfunktion definiert ist, eine Bewegung eines Objekts zu erfassen und in Anhängigkeit dieser Erfassung zwischen dem ersten und dem zweiten Betriebsmodus zu wechseln.

In dieser Ausgestaltung ist es möglich, durch die Schutzeinrichtung, bspw. einen bildgebenden Sensor, zu überprüfen, ob in einem Sichtfeld der Schutzeinrichtung Bewegungen stattfinden. Ist für eine längere Zeit keine Bewegung im Umfeld der technischen Anlage erkennbar, kann von einem Produktionsstopp oder einer Ruhepause ausgegangen werden. Die Vorrichtung kann dann veranlasst werden, in den reduzierten Betrieb überzugehen. In gleicher Weise kann eine erneute Bewegung im Umfeld ein Indikator dafür sein, aus dem reduzierten Betrieb in den Normalbetrieb zu wechseln, da bspw. die Produktion erneut anläuft. Ein Übergang zwischen den Betriebsmodi kann so einfach, flexible und automatisiert erfolgen, wodurch sich die Energieeinsparung weiter optimieren lässt.

In einer weiteren Ausgestaltung ist die Schutzeinrichtung dazu ausgebildet, eine Helligkeitsinformation zu erfassen und in Anhängigkeit dieser Erfassung zwischen dem ersten und dem zweiten Betriebsmodus zu wechseln.

In dieser Ausgestaltung kann somit eine Helligkeitsinformation ausschlaggebend sein, einen Übergang von einem Betriebsmodus zu einem anderen zu bewirken. Beispielsweise kann die Schutzeinrichtung eine schlagartige Veränderung der Beleuchtung der technischen Anlage registrieren und dadurch auf einen Produktionsstopp oder -anlauf schließen, da bspw. die Hallenbeleuchtung aus- oder eingeschaltet wird. Da ein automatisches Ein- und Ausschalten in vielen Produktionshallen bereits eine etablierte Maßnahme zur Energieeinsparung ist, kann in dieser Ausgestaltung zusätzlich Energie eingespart werden.

In einer weiteren Ausgestaltung ist die Schutzeinrichtung dazu ausgebildet, eine definierte Geste einer Person, insbesondere kontaktlos, zu erfassen und in Anhängigkeit dieser Erfassung zwischen dem ersten und dem zweiten Betriebsmodus zu wechseln.

In dieser Ausgestaltung kann ein Übergang von einem Betriebsmodus zu einem anderen aktiv von einem Bediener der Anlage herbeigeführt werden. Hierfür können vorteilhaft die Sensoren der Schutzeinrichtung selbst verwendet werden, um die definierte Geste des Bedieners zu erfassen. Eine zusätzliche Einrichtung wird nicht benötigt. Beispielsweise kann ein Bediener durch eine definierte Armbewegung der Vorrichtung mitteilen, dass eine Produktionspause bevorsteht bzw. die Produktion fortgesetzt wird. Die Ausgestaltung trägt somit zur weiteren Steigerung der Flexibilität bei.

In einer weiteren Ausgestaltung ist die Vorrichtung dazu eingerichtet, von dem zweiten Betriebsmodus in den ersten Betriebsmodus zu wechseln, wenn in dem zweiten Betriebsmodus das auslösende Ereignis in dem ersten Schutzraum erfasst wird.

Gemäß dieser Ausgestaltung kann bspw. im reduzierten Betrieb nur ein Zugangsbereich zu einer Maschine überwacht werden, jedoch nicht ein Schutzraum an der Maschine selbst. Ein auslösendes Ereignis im Zugangsbereich kann dann dazu führen, dass die Vorrichtung von dem reduzierten Betrieb in den Normalbetrieb wechselt und eine Überwachung des Schutzraums an der Maschine gestartet wird. Durch diese Automatisierung kann weiteres Energieeinsparpotential ausgeschöpft werden.

In einer weiteren Ausgestaltung ist die Wahl des ersten oder zweiten Betriebsmodus von einem Betriebsmodus und/oder Zustand der technischen Anlage abhängig.

In dieser Ausgestaltung ist die Wahl des Betriebsmodus der Vorrichtung somit an einen Betriebsmodus und/oder Zustand der technischen Anlage geknüpft. Da eine Sicherheitsbetrachtung maßgeblich vom Zustand der technischen Anlage abhängt, kann durch die Verknüpfung die Güte der Sicherheitsfunktion unmittelbar an die tatsächliche sicherheitstechnische Anforderung angepasst werden. Die Vorrichtung kann somit flexibel an die geforderten sicherheitstechnischen Bedingungen anpasst werden und für den gegebenen Zustand nur die Sicherheit gewährleisten, die in diesem Zustand gefordert ist. Auf diese Weise lässt sich weiteres Energieeinsparpotential ausschöpfen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Vorrichtung gemäß einer bevorzugten Ausführungsform,
- Fig. 2: eine schematische Darstellung eines Verfahrens gemäß einer bevorzugten Ausführungsform, und
- Fig. 3: ein Anwendungsszenario für eine Vorrichtung und ein Verfahren nach einer Ausführungsform der vorliegenden Erfindung.

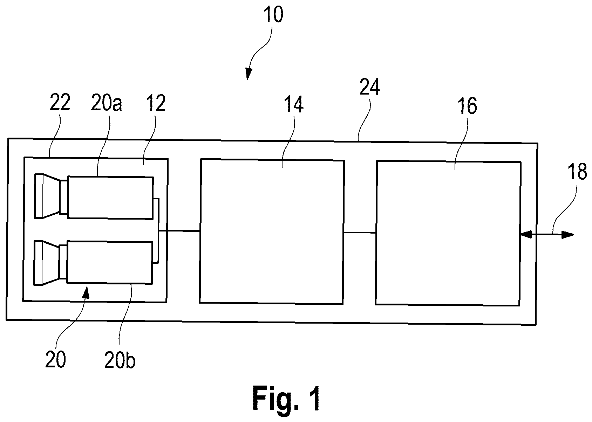

In der Fig. 1 ist ein Ausführungsbeispiel einer Vorrichtung zur energieeffizienten Ausführung einer Sicherheitsfunktion an einer technischen Anlage in seiner Gesamtheit mit der Bezugsziffer 10 bezeichnet. Die Vorrichtung umfasst eine Schutzeinrichtung 12 zur Erfassung eines auslösenden Ereignisses der Sicherheitsfunktion sowie eine Verarbeitungseinheit 14 zur Ausführung einer sicherheitsgerichteten Reaktion in Abhängigkeit der Erfassung durch die Schutzeinrichtung 12.

Ergänzend kann die Vorrichtung eine Ein- und Ausgabeeinheit 16 und/oder eine Kommunikationsschnittstelle 18 umfassen, deren sich die Verarbeitungseinheit 14 zur Ausführung der Sicherheitsfunktion bedient. Beispielsweise kann die Ein- und Ausgabeeinheit 16 die Vorrichtung direkt mit der zu überwachenden technischen Anlage verbinden, um diese bei einer durch die Verarbeitungseinheit angezeigten Gefahrensituation abzuschalten oder anderweitig stillzusetzen.

Alternativ kann die von der Verarbeitungseinheit 14 bereitgestellte Information auch über die Kommunikationsschnittstelle 18, bspw. eine sichere Bus- bzw. Netzwerkschnittstelle, an einer Maschinensteuerung übertragen werden, welche die Maschinenbewegung derartig beeinflussen kann, dass keine Gefahr von dieser mehr ausgeht. Eine Einflussnahme kann eine Herabsetzung der Bewegungsgeschwindigkeit, eine Richtungsänderung der Bewegung sowie das teilweise oder vollständige Stillsetzen der Maschine beinhalten und je nach Art des auslösenden Ereignisses verschieden sein.

Die Schutzeinrichtung 12 kann, wie in Fig. 1 dargestellt, eine Sensoreinheit mit einem bildgebenden Sensor 20 umfassen, um ein auslösendes Ereignis für eine Sicherheitsfunktion in einem definierten Schutzbereich optisch zu erfassen. Insbesondere kann sich der bildgebende Sensor 20 aus zwei oder mehreren zueinander versetzten Kameras 20a, 20b zusammensetzen, um mittels Stereoskopie einen räumlichen Schutzbereich zu erfassen. Das auslösende Ereignis kann bspw. das Eindringen eines Objekts oder einer Person in den Schutzbereich sein.

Bei einem bildgebenden Sensor 20 mit mehreren Kameras 20a, 20b sind diese bevorzugt in einem gemeinsamen Gehäuse 22 angeordnet, um eine werkseitige Kalibrierung zu ermöglichen. Im Übrigen können die Komponenten der Vorrichtung 10 ebenfalls zusammen in einem gemeinsamen Gehäuse 24 angeordnet sein. Ebenso ist es denkbar, dass die einzelnen Komponenten auf verschiedene Geräte funktional oder strukturell verteilt sind.

Die Verarbeitungseinheit 14 ist eine Recheneinheit, welche die von der Schutzeinrichtung 12 erfassten Daten verarbeitet und eine entsprechende Reaktion auslöst. Die Recheneinheit kann eine Ein- und Ausgabe, eine Speicher- und eine zentrale Verarbeitungseinheit (CPU) umfassen. Beispielsweise kann die Recheneinheit als Mikrocontroller oder System-on-Chip (SoC) in Form einer integrierten Einheit ausgebildet sein. Insbesondere kann die Recheneinheit redundant ausgelegt sein und zwei oder mehrere parallele Verarbeitungskanäle bereitstellen, die unabhängig voneinander arbeiten können.

Die Datenverarbeitung kann insbesondere eine Bildverarbeitung sein, welche Bilddaten der Schutzeinrichtung zyklisch auswertet. Die Auswertung kann das Erfassen und Interpretieren von Änderungen in den Bilddaten umfassen, anhand derer Rückschlüsse auf konkrete Situationen in einem definierten Schutzbereich getroffen werden können. Die Bildverarbeitung ermöglicht somit eine Konkretisierung und Klassifizierung eines durch die Schutzeinrichtung erfassten Ereignisses, wodurch eine situationsabhängige Ausführung der sicherheitsgerichteten Reaktion erreicht werden kann.

Sowohl die Erfassung durch die Schutzeinrichtung 12 als auch die Verarbeitung der erfassten Daten durch die Verarbeitungseinheit 14 kann mit unterschiedlicher Güte erfolgen. Beispielsweise kann die Schutzeinrichtung 12 mit unterschiedlicher Auflösung betrieben werden und somit ein auslösendes Ereignis mit unterschiedlicher Genauigkeit erfassen. Die Erfassung mit einer ersten Auflösung (erste Güte) kann bspw. Objekte in der Größenordnung einer menschlichen Hand erfassen, während die Erfassung mit einer zweiten Auflösung (zweite, verminderte Güte) nur das Erfassen einer ganzen Person ermöglicht. Es versteht sich, dass unterschiedliche Auflösungen nur ein Beispiel für unterschiedliche Güte sein kann.

Ebenso kann die Verarbeitung durch die Verarbeitungseinheit 14 mit unterschiedlicher Güte erfolgen, bspw. indem eine Auswertung der Bilddaten nicht pixelweise, sondern in größeren Clustern erfolgt oder die Verarbeitungsgeschwindigkeit insgesamt durch die Bereitstellung weniger Rechenressourcen verlangsamt wird.

Das erfindungsgemäße Betreiben der Schutzeinrichtung 12 bzw. der Verarbeitungseinheit 14 mit verminderter Güte wird als reduzierter Betrieb bezeichnet. Der reduzierte Betrieb zeichnet sich dadurch aus, dass eine sicherheitsrelevante Funktion, wenn auch eingeschränkt, erhalten bleibt, so dass vorteilhaft eine normgerechte Absicherung der technischen Anlagen auch im reduzierten Betrieb möglich ist. Gleichzeitig können beim reduzierten Betrieb Maßnahmen ergriffen werden, die zu einer Energieeinsparung der sicherheitsgerichteten Einrichtung führt. Hierbei kann der reduzierte Betrieb einerseits unmittelbar zu einer Energieeinsparung führen oder andere energieeinsparende Maßnahmen ermöglichen, die einen Energieverbrauch insgesamt verringern.

Energieeinsparende Maßnahmen können bspw. eine Reduzierung der Taktfrequenz eines Prozessors, des Abschaltens einzelner Prozessorkerne, die Reduzierung oder Abschaltung von Lüftern und/oder das Deaktivieren von nicht mehr benötigten Hard- und Softwaremodulen beinhalten. Eine weitere Möglichkeit der Energieeinsparung bei sicherheitsgerichteten Einrichtungen kann das Abschalten einzelner oder mehrerer Verarbeitungskanäle sein. Die Folge der Energieeinsparung kann sein, dass im reduzierten Betrieb einzelne sicherheitstechnische Anforderungen teilweise oder gar nicht mehr erfüllt werden können, so dass der reduzierte Betrieb bei einer sicherheitstechnischen Betrachtung separat zu beurteilen ist. In der Regel verlängert sich durch den reduzierten Betrieb entweder die Reaktionszeit oder die jeweilige Sicherheitseinstufung. Abhängig von einer Risikoanalyse der Anlage, kann dies in definierten Situationen jedoch akzeptabel sein.

Neben dem reduzierten Betrieb ist es denkbar, die Vorrichtung auch in einem Bereitschaftsbetrieb zu versetzen. Beim Bereitschaftsbetrieb ist die sicherheitsrelevante Funktion deaktiviert, bspw. indem sichere Ausgänge ausgeschaltet sind. Hierdurch kann ein Leistungsverbrauch weiter abgesenkt werden. Beispielsweise kann durch Abschalten aller nicht benötigten Komponenten die Leistungsaufnahme von sicherheitsgerichteten Einrichtungen auf 2 bis 10% des Normalverbrauchs reduziert werden. Gerade bei prozessorbasierten Systemen kann bspw. eine gegenwärtige Systemkonfiguration im Arbeitsspeicher abgelegt werden und der Prozessor in einen "Sleep"-Modus versetzt werden, in dem er nur wenig Energie benötigt und eine Kühlung deaktiviert werden kann. Ein schneller Neustart für den Normalbetrieb ist dadurch jederzeit möglich und auch in kurzer Zeit erreichbar. Im Bereitschaftsbetrieb kann eine Sicherheitsfunktion jedoch nicht gewährleistet werden.

Der Übergang zwischen den einzelnen Betriebsmodi kann entweder gesteuert erfolgen oder von der Vorrichtung selbst veranlasst werden. Gesteuert heißt in diesem Zusammenhang, dass die Vorrichtung von einer übergeordneten Steuerung in den jeweiligen Betriebsmodus versetzt wird. Dies hat den Vorteil, dass ein reduzierter Betrieb von sicherheitsgerichteten Einrichtungen zentral steuerbar ist.

Alternativ oder ergänzend kann die Vorrichtung aber auch den jeweiligen Betriebsmodus selbstständig erkennen, bspw. indem es überprüft, ob im Erfassungsbereich der Schutzeinrichtung 12 Änderungen zu erkennen sind. Bei der Verwendung eines bildgebenden Sensors 20 kann dieser bspw. überprüfen, ob im Sichtfeld Bewegungen zu erkennen sind. Automatisierte Produktionsanlagen zeichnen sich dadurch aus, dass definierte Teile, bspw. Roboterarme, kontinuierlich in Bewegung sind. Ebenso können sich Anlagen dadurch auszeichnen, dass kontinuierlich Werkstoffe hinzugeführt werden oder sich Anlagenbediener an der Maschine aufhalten. Ist für eine längere Zeitdauer im Sichtfeld keine Bewegung erkennbar, kann die Vorrichtung auf einen Produktionsstopp oder eine Ruhepause schließen und zunächst in den reduzierten Betrieb übergehen und ggf. nach längerer Zeit auch den Bereitschaftsbetrieb einnehmen.

Während vorstehend die Schutzeinrichtung 12 im Wesentlichen als bildgebender Sensor dargestellt worden ist, sind in anderen Ausführungsbeispielen auch andere Schutzeinrichtungen denkbar. Insbesondere können andere Schutzeinrichtungen verwendet werden, die zusätzlich zu ihrer Erfassung des sicherheitsauslösenden Ereignisses weitere Information erfassen können. Beispielsweise kann die Schutzeinrichtung auch eine Trittmatte sein, die neben dem eigentlichen Auftreten auch eine Position des Auftretens bestimmen kann. Wie bei einer sicheren Kamera lassen sich auch hier verschiedene Bereiche definieren, wobei eine Güte durch die Größe oder die Anzahl der überwachten Bereiche bestimmt sein kann.

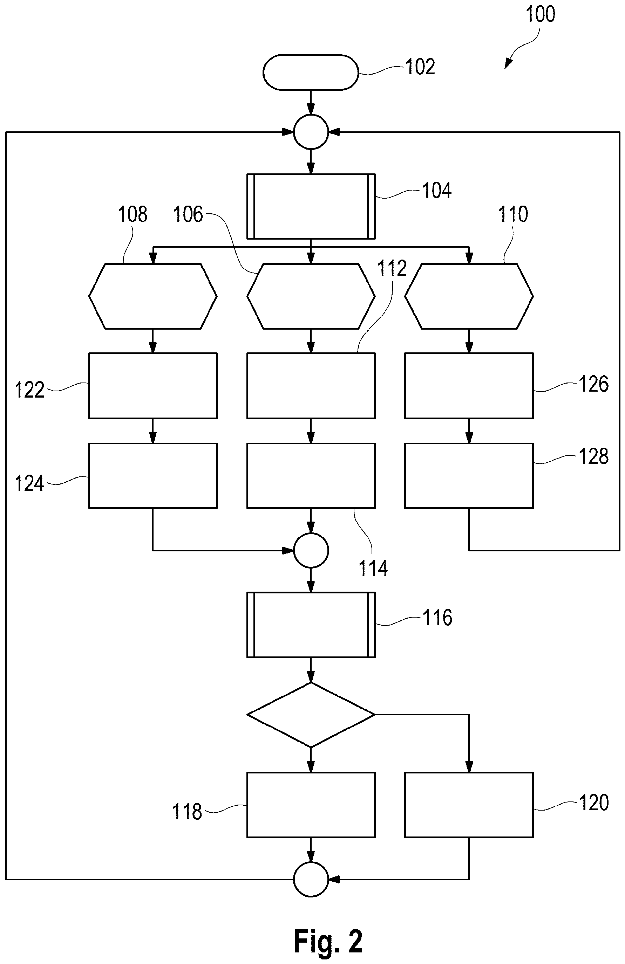

Fig. 2 zeigt in einer schematischen Darstellung einen Auswertezyklus einer Vorrichtung gemäß einem bevorzugten Ausführungsbeispiel.

Der Auswertezyklus 100 durchläuft nach dem Start 102 zyklisch eine Schleife und prüft zunächst im Schritt 104, welcher Betriebsmodus aktiviert werden soll. Hierbei kann der Betriebsmodus entweder von einer externen Steuerung über einen sicheren Bus- oder Netzwerk vorgegeben sein oder die Schutzeinrichtung ist selbst eingerichtet den jeweiligen Betriebsmodus zu ermitteln, bspw. durch das Erfassen von Bewegungen in einem definierten Schutzraum. Im hier dargestellten Ausführungsbeispiel kann die Vorrichtung drei Betriebsmodi einnehmen: Normalbetrieb 106, reduzierter Betrieb 108 und Bereitschaftsbetrieb 110.

Im Normalbetrieb 106 werden zunächst Standardeinstellungen wiederhergestellt. Dies kann bspw. das Festlegen definierter Schutzräume auf ihre ursprüngliche Position und Größe beinhalten (112). Ferner können sämtliche energieeinsparenden Maßnahmen deaktiviert werden (114). Anschließend folgt eine Schutzraumüberwachung 116, bei der überprüft wird, ob sich Objekte oder Personen in den Schutzräumen befinden. Falls keine Schutzraumverletzung vorliegt, kann die Vorrichtung im regulären Betrieb versetzt werden, bspw. indem sichere Ausgänge aktiviert oder im eingeschalteten Zustand belassen werden (118).

Bei einer Schutzraumverletzung wird hingegen der reguläre Betrieb nicht eingenommen, d.h. etwaige sichere Ausgänge bleiben ausgeschaltet, was bspw. zu einem Stillstand der Anlage führt (120). Es versteht sich, dass das Abschalten von Ausgängen hier nur beispielhaft zu verstehen ist und andere sicherheitstechnischen Maßnahmen gleichermaßen ergriffen werden können.

Im Anschluss an die Auswahl wird der Auswertezyklus 100 erneut durchlaufen und zunächst geprüft, ob der Betriebsmodus zu ändern ist (104). Wie zuvor kann dies von einer externen Stelle vorgegeben sein oder aber durch eine Erfassung der Vorrichtung selbst bestimmt werden. Liegen nun ausreichende Kriterien dafür vor, den reduzierten Betrieb (108) einzunehmen wird zunächst eine etwaige Schutzraumanpassung vorgenommen (122), um die Überwachung auf einen reduzierten Betrieb einzustellen. Insbesondere können Schutzräume vergrößert werden, so dass längeren Reaktionszeiten, die durch den reduzierten Betrieb verursacht sein können, kompensiert werden. Typischerweise vergrößern sich die Sicherheitsabstände, wodurch die Schutzräume weiter entfernt von der Gefahrenquelle angeordnet werden müssen.

Anschließend können die energieeinsparenden Maßnahmen, wie bspw. eine Reduzierung der Lüftedrehzahl, das Abschalten von Prozessorkernen, Aussetzen von Diagnosefunktion etc. aktiviert werden (124). Die Vorrichtung führt dann weiterhin die Sicherheitsfunktion aus jedoch mit verminderter Güte, so dass ggf. mehr Zeit für die Erfassung und Verarbeitung benötigt wird. Die technische Anlage kann jedoch in den Betrieb übergehen (118).

Optional kann in einem weiteren Durchlauf des Auswertezyklus 100 die Vorrichtung auch in einem Bereitschaftsbetrieb 110 übergehen, bei dem die Sicherheitsfunktion vollständig deaktiviert wird. Hierbei werden zunächst alle sicheren Ausgänge ausgeschaltet (126), so dass sichergestellt werden kann, dass von der technischen Anlage keine Gefahr mehr für Personen oder Objekte ausgeht. Ferner können gegenüber dem reduzierten Betrieb 108 weitere energieeinsparenden Maßnahmen aktiviert werden, wie bspw. das Überführen der Verarbeitungseinheit in einen Standby-Modus (128).

Ein Wechsel vom Bereitschaftsbetrieb 110 in den Normalbetrieb 106 oder den reduzierten Betrieb 108 kann nur durch ein externes Signal erfolgen, da die Anlage im "sicheren Zustand" ist und alle Bewegungen gestoppt sind.

Es versteht sich, dass neben den vorstehend genannten drei Betriebsmodi weitere Betriebsmodi denkbar sind. Insbesondere sind Mischformen denkbar, bei denen bspw. Teile der Vorrichtung in einem reduzierten Betrieb 108 sind, während andere sich im Bereitschaftsbetrieb 110 befinden. Beispielsweise kann sich ein Verarbeitungskanal einer sicherheitsgerichteten Einrichtung im reduzierten Betrieb 108 befinden und den Auswertezyklus 100 entsprechend durchlaufen, während ein anderer Kanal in einem Bereitschaftsbetrieb 110 ist. In diesem Fall kann der eine Kanal, den anderen Kanal "wecken", so dass die Vorrichtung zurück in den Normalbetrieb 106 oder einen reduzierten Betrieb 108 übergehen kann. Auf diese Weise lässt sich weiteres Energieeinsparpotential ausschöpfen.

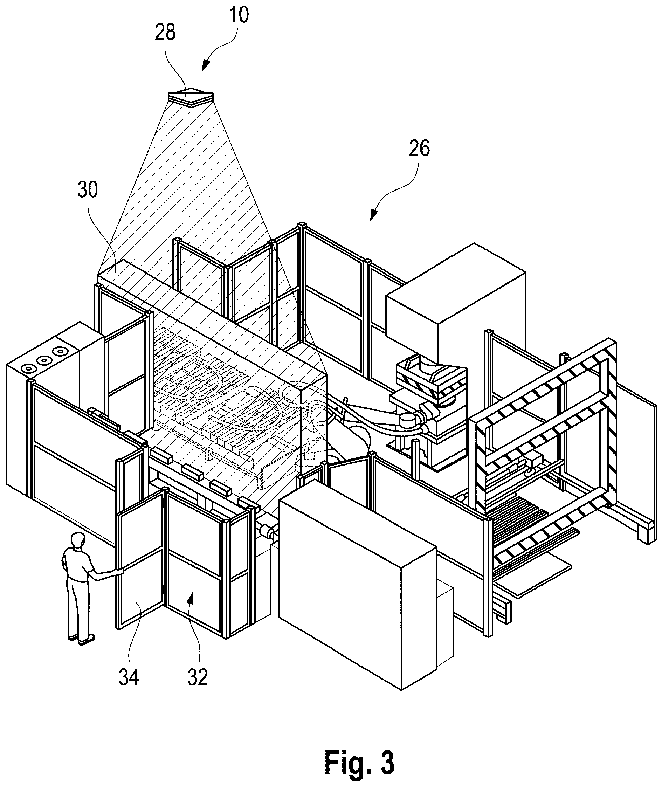

Fig. 3 zeigt ein Anwendungsszenario einer Vorrichtung und eines Verfahrens gemäß einem Ausführungsbeispiel der vorliegenden Erfindung.

Fig. 3 zeigt exemplarisch für eine technische Anlage 26 eine industrielle Fertigungsanlage, die von einer erfindungsgemäßen Vorrichtung 10 überwacht wird. Die Vorrichtung ist hier ein sicheres Kamerasystem 28, welches hier oberhalb der technischen Anlage 26 angeordnet ist und mindestens zwei bildgebende Sensoren aufweist, die Bilder der Anlage und deren Umgebung aus einer Vogelperspektive aufnehmen.

Ferner umfasst die Vorrichtung eine Verarbeitungseinheit (hier nicht dargestellt), welche die von dem sicheren Kamerasystem 28 bereitgestellten Bilddaten auswertet. Die Auswertung konzentriert sich darauf, Änderungen in bestimmten Ausschnitten der aufgenommenen Bilder zu erfassen, um dadurch auf das Eindringen von Personen in Schutzbereiche der technischen Anlage 26 zu schließen. Ein erster Schutzbereich 30 ist hier exemplarisch als quaderförmiger Raumbereich unmittelbar vor der technischen Anlage 26 angedeutet.

Durch die Verwendung zweier Kameras und stereoskopischer Auswertung kann somit ein dreidimensionaler Schutzraum 30 definiert werden. Sobald eine Person in diesen Schutzraum 30 eintritt, ändern sich die Bilddaten und die Verarbeitungseinheit kann eine sicherheitsgerichtete Reaktion auslösen. Bspw. kann ein Signal an die Steuerung der technischen Anlage 26 versendet werden, so dass diese ihren Betrieb einstellt oder verlangsamt. Alternativ kann die Verarbeitungseinheit auch dazu eingerichtet sein, direkt auf eine Stromversorgung der technischen Anlage 26 einzuwirken, so dass diese unmittelbar stillgesetzt wird.

Um sicherheitstechnischen Anforderungen zu genügen, verfügt die Verarbeitungseinheit hier über zwei Kanäle, innerhalb derer die Bilddaten unabhängig voneinander ausgewertet werden. Falls ein Kanal ausfällt, kann die sicherheitsgerichtete Reaktion von dem verbleibenden Kanal ausgeführt werden. Zusätzlich können die Kanäle so eingerichtet sein, dass sie gegenseitig ihre Funktionsfähigkeit überprüfen.

Die Anforderung an die Sicherheitsfunktion wird durch eine Risikoanalyse bestimmt. Hierbei können bei unterschiedlichen Betriebszuständen der technischen Anlagen 26 unterschiedliche Anforderungen an die Sicherheitsfunktion gestellt werden. Die erfindungsgemäße Vorrichtung ist dazu eingerichtet, sich an diese unterschiedlichen Anforderungen anzupassen.

Beispielsweise kann in einem reduzierten Betrieb der Vorrichtung 10 die Überwachung auf einen Eingangsbereich 32 der technischen Anlage 26 beschränkt werden. Der Eingangsbereich ist dann ein zweiter Schutzraum im Sinne dieser Offenbarung. Gleichzeitig ist es denkbar, im reduzierten Betrieb die Auflösung zu reduzieren, so dass nur eine ganze Person als auslösendes Ereignis im Eingangsbereich 32 erfasst wird, während hingegen im Normalbetrieb im ersten Schutzbereich 30 auch Objekte geringerer Größe bereits als auslösendes Ereignis erfasst werden können.

Sobald eine Person in den Eingangsbereich 32 tritt, kann die Vorrichtung 10 in den Normalbetrieb übergehen und wieder eine Überwachung des Schutzraums 30 direkt vor der Anlage 12 durchführen. Alternativ oder ergänzend kann im reduzierten Betrieb auch einer der beiden Verarbeitungskanäle der Vorrichtung 10 deaktiviert werden, so dass einige Komponenten der Vorrichtung ausgeschaltet werden können. Ebenso ist es denkbar, dass die Vorrichtung mit einer weiteren sicherheitsgerichteten Einrichtung, wie bspw. einer Schutztür 34 des Eingangsbereich 32 der technischen Anlage 26 kombiniert wird, so dass ein Wechsel von einem reduzierten Betrieb in den Normalbetrieb durch ein Signal dieser sicherheitsgerichteten Einrichtung ausgelöst werden kann.

Es versteht sich, dass das vorstehende Anwendungsszenario nur eine Möglichkeit zeigt, wie die neue Vorrichtung verwendet werden kann. Andere Anwendungen sind denkbar, in denen weitere Maßnahmen zur Energieeinsparung verwendet werden können bzw. in denen die Güte der Sicherheitsfunktion anpassbar ist.

## Patentansprüche

1. Vorrichtung (10) zur energieeffizienten Ausführung einer Sicherheitsfunktion an einer technischen Anlage (26), umfassend:
eine Schutzeinrichtung (12) zur Erfassung eines auslösenden Ereignisses der Sicherheitsfunktion sowie eine Verarbeitungseinheit (14) zur Ausführung einer sicherheitsgerichteten Reaktion der Sicherheitsfunktion in Abhängigkeit der Erfassung durch die Schutzeinrichtung (12),
wobei die Vorrichtung in einem ersten Betriebsmodus (106) und einem zweiten Betriebsmodus (108) wahlweise betreibbar ist, und
wobei in dem ersten Betriebsmodus (106) die Schutzeinrichtung (12) und/oder die Verarbeitungseinheit (14) eingerichtet sind, gemäß einer ersten Güte das auslösende Ereignis zu erfassen und/oder die sicherheitsgerichtete Reaktion auszuführen und in dem zweiten Betriebsmodus (108) gemäß einer zweiten Güte,
wobei die zweite Güte kleiner ist als die erste Güte und in dem zweiten Betriebsmodus (108) zur Energieeinsparung die Schutzeinrichtung (12) und/oder die Verarbeitungseinheit (14) mit einer verringerten Leistung betreibbar sind,
**gekennzeichnet dadurch, dass** ein definierter Schutzraum, innerhalb dessen die Sicherheitsfunktion ausgeführt wird, variabel einstellbar ist und mindestens einen ersten Schutzraum und einen zweiten Schutzraum umfasst, wobei die Schutzeinrichtung (12) eingerichtet ist, in dem ersten Betriebsmodus (106) das auslösende Ereignis in dem ersten und dem zweiten Schutzraum und in dem zweiten Betriebsmodus nur in dem ersten Schutzraum zu erfassen.

2. Vorrichtung nach Anspruch 1, wobei die erste Güte und die zweite Güte durch eine Reaktionszeit und/oder ein Erfassungsvermögen der Schutzeinrichtung und/oder Verarbeitungseinheit definiert sind und in dem zweiten Betriebsmodus (108) die Reaktionszeit und/oder das Erfassungsvermögen reduziert sind.

3. Vorrichtung nach Anspruch 1 oder 2, wobei die Vorrichtung wahlweise in einem dritten Betriebsmodus (110) betreibbar ist, in dem die Erfassung durch die Schutzeinrichtung (12) und/oder die Ausführung durch die Verarbeitungseinheit (14) deaktiviert sind.

4. Vorrichtung nach einem der Ansprüche 1 bis 3, wobei die verringerte Leistung der Schutzeinrichtung (12) und/oder der Verarbeitungseinheit (14) ein Reduzieren der Taktfrequenz, ein Abschalten von einem oder mehreren Prozessorkernen, eine Reduzierung einer Lüfterdrehzahl und/oder ein Deaktivieren von Softwaremodulen umfasst.

5. Vorrichtung nach einem der Ansprüche 1 bis 4, wobei die Schutzeinrichtung (12) und/oder die Verarbeitungseinheit (14) mehrkanalig ausgebildet sind und die verringerte Leistung der Schutzeinrichtung (12) und/oder der Verarbeitungseinheit (14) durch Abschalten eines oder mehrerer Kanäle erfolgt.

6. Vorrichtung nach einem der Ansprüche 1 bis 5, wobei die Vorrichtung eingerichtet ist, von einer separaten Steuerung einen Steuerbefehl zu erhalten und in Abhängigkeit des Steuerbefehls den ersten oder zweiten Betriebsmodus (106, 108) auszuwählen.

7. Vorrichtung nach einem der Ansprüche 1 bis 6, wobei die Vorrichtung über Mittel verfügt, um automatisch zwischen dem ersten und dem zweiten Betriebsmodus (106, 108) zu wechseln, insbesondere wobei die Vorrichtung dazu eingerichtet ist, Informationen über den gewählten Betriebsmodus an andere Einrichtungen zu melden.

8. Vorrichtung nach einem der Ansprüche 1 bis 7, wobei die Schutzeinrichtung (12) mindestens einen bildgebenden Sensor (20) aufweist.

9. Vorrichtung nach einem der Ansprüche 1 bis 8, wobei die Schutzeinrichtung (12) dazu eingerichtet ist, außerhalb eines definierten Schutzraums, innerhalb dessen die Sicherheitsfunktion definiert ist, eine Bewegung eines Objekts zu erfassen und in Anhängigkeit dieser Erfassung zwischen dem ersten und dem zweiten Betriebsmodus (106, 108) zu wechseln.

10. Vorrichtung nach einem der Ansprüche 1 bis 9, wobei die Schutzeinrichtung (12) dazu ausgebildet ist, eine Helligkeitsinformation zu erfassen und in Anhängigkeit dieser Erfassung zwischen dem ersten und zweiten Betriebsmodus (106, 108) zu wechseln.

11. Vorrichtung nach einem der Ansprüche 1 bis 10, wobei die Schutzeinrichtung (12) dazu ausgebildet ist, eine definierte Geste einer Person, insbesondere kontaktlos, zu erfassen und in Anhängigkeit dieser Erfassung zwischen dem ersten und zweiten Betriebsmodus (106, 108) zu wechseln.

12. Vorrichtung nach einem der Ansprüche 1 bis 11, wobei die Vorrichtung dazu eingerichtet ist, von dem zweiten Betriebsmodus (108) in den ersten Betriebsmodus (106) zu wechseln, wenn in dem zweiten Betriebsmodus (108) das auslösende Ereignis in dem ersten Schutzraum erfasst wird.

13. Vorrichtung nach einem der Ansprüche 1 bis 12, wobei die Wahl des ersten oder zweiten Betriebsmodus (106, 108) von einem Betriebsmodus der technischen Anlage abhängig ist.

14. Verfahren zur energieeffizienten Ausführung einer Sicherheitsfunktion, mit den Schritten:
- Bereitstellen einer Schutzeinrichtung (12) zur Erfassung eines auslösenden Ereignisses der Sicherheitsfunktion sowie eine Verarbeitungseinheit (14) zur Ausführung einer sicherheitsgerichteten Reaktion der Sicherheitsfunktion in Abhängigkeit der Erfassung durch die Schutzeinrichtung (12),
- Betreiben der Vorrichtung wahlweise in einem ersten Betriebsmodus (106) und einem zweiten Betriebsmodus (108),
wobei in dem ersten Betriebsmodus (106) die Schutzeinrichtung (12) und/oder die Verarbeitungseinheit (14) eingerichtet sind, gemäß einer ersten Güte das auslösende Ereignis zu erfassen und/oder die sicherheitsgerichtete Reaktion auszuführen und in dem zweiten Betriebsmodus (108) gemäß einer zweiten Güte, und wobei die zweite Güte kleiner ist als die erste Güte und in dem zweiten Betriebsmodus (108) zur Energieeinsparung die Schutzeinrichtung (12) und/oder die Verarbeitungseinheit (14) mit einer verringerten Leistung betrieben werden,
**gekennzeichnet dadurch, dass** ein definierter Schutzraum, innerhalb dessen die Sicherheitsfunktion ausgeführt wird, variabel einstellbar ist und mindestens einen ersten Schutzraum und einen zweiten Schutzraum umfasst, wobei die Schutzeinrichtung (12) in dem ersten Betriebsmodus (106) das auslösende Ereignis in dem ersten und dem zweiten Schutzraum und in dem zweiten Betriebsmodus nur in dem ersten Schutzraum erfasst.

## Claims

1. An apparatus (10) for energy-efficient execution of a safety function used for safeguarding a technical installation (26), comprising:
a safety device (12) for detecting a triggering event of the safety function and a processing unit (14) for executing a safety-related reaction of the safety function based on the detection by the safety device (12),
wherein the apparatus is selectively operable in a first operating mode (106) and a second operating mode (108), and
wherein in the first operating mode (106) the safety device (12) and/or the processing unit (14) are configured to operate according to a first quality level, and in the second operating mode (108) the safety device (12) and/or the processing unit (14) are configured to operate according to a second quality level,
wherein the second quality level is lower than the first quality level and the safety device (12) and/or the processing unit (14) are operable with a reduced capacity in the second operating mode (108) to save energy,
**characterized in that** a defined safety space, within which the safety function is carried out, is variably adjustable and includes at least a first safety space and a second safety space, wherein the safety device (12) is configured to detect the triggering event in the first safety space and the second safety space, in the first operating mode (106), and only in the first safety space, in the second operating mode.

2. The apparatus according to claim 1, wherein the first quality level and the second quality level are defined by a reaction time and/or a detection capability of the safety device and/or the processing unit, and wherein in the second operating mode (108) the reaction time and/or the detection capability are reduced.

3. The apparatus according to claim 1 or 2, wherein the apparatus is optionally operable in a third operating mode (110) in which the detection by the safety device (12) and/or the execution by the processing unit (14) are deactivated.

4. The apparatus according to one of claims 1 to 3, wherein the reduced capacity of the safety device (12) and/or the processing unit (14) includes a reduction of the clock frequency, a shutdown of one or more processor cores, a reduction of a fan speed and/or a deactivation of software modules.

5. The apparatus according to any one of claims 1 to 4, wherein the safety device (12) and/or the processing unit (14) are of multi-channel design and the reduced capacity of the safety device (12) and/or the processing unit (14) is achieved by switching off one or more channels.

6. The apparatus according to any one of claims 1 to 5, wherein the apparatus is further configured to receive a control command from a separate controller and to select the first operating mode or the second operating mode (106, 108) based on the control command.

7. The apparatus according to any one of claims 1 to 6, wherein the apparatus is configured to switch automatically between the first operating mode and the second operating mode (106, 108), in particular wherein the apparatus is further configured to report information regarding the selected operating mode to another device.

8. The apparatus according to any one of claims 1 to 7, wherein the safety device (12) comprises at least one imaging sensor (20).

9. The apparatus according to any one of claims 1 to 8, wherein the safety device (12) is configured to detect a movement of an object outside a defined safety space within which the safety function is defined, and to switch between the first operating mode and the second operating mode (106, 108) based on this detection.

10. The apparatus according to any one of claims 1 to 9, wherein the safety device (12) is configured to detect brightness information and to switch between the first operating mode and the second operating mode (106, 108) based on this detection.

11. The apparatus according to any one of claims 1 to 10, wherein the safety device (12) is configured to detect a defined gesture of a person, in particular in a contactless manner, and to switch between the first operating mode and the second operating mode (106, 108) based on this detection.

12. The apparatus according to any one of claims 1 to 11, wherein the apparatus is configured to switch from the second operating mode (108) to the first operating mode (106) when in the second operating mode (108) the triggering event is detected in the first safety space.

13. The apparatus according to any one of claims 1 to 12, wherein the choice of the first operating mode or second operating mode (106, 108) is based on an operating state of the technical installation.

14. Method for energy-efficient execution of a safety function used for safeguarding a technical installation, comprising:
- providing a safety device (12) for detecting a triggering event of the safety function and providing a processing unit (14) for executing a safety-related reaction of the safety function based on the detection by the safety device (12); and
- operating the safety device and the processing unit in a first operating mode and a second operating mode,
wherein, in the first operating mode (106), the safety device (12) and/or the processing unit (14) operate in accordance with a first quality level and, in the second operating mode (108), the safety device (12) and/or the processing unit (14) operate in accordance with a second quality level, and
wherein the second quality level is lower than the first quality level and in the second operating mode (108) the safety device (12) and/or the processing unit (14) are operable with a reduced capacity to save energy
**characterized in that** a defined safety space, within which the safety function is carried out, is variably adjustable and includes at least a first safety space and a second safety space, wherein the safety device (12) detects the triggering event in the first safety space and the second safety space, in the first operating mode (106), and only in the first safety space, in the second operating mode.

## Revendications

1. Dispositif (10) pour la mise en oeuvre économe en énergie d'une fonction de sécurité sur une installation technique (26), comprenant :
un équipement de protection (12) pour la détection d'un événement déclencheur de la fonction de sécurité, ainsi qu'une unité de traitement (14) pour mettre en oeuvre une réaction visant la sécurité de la fonction de sécurité en fonction de la détection par l'équipement de protection (12),
dans lequel le dispositif peut fonctionner au choix dans un premier mode de fonctionnement (106) et un deuxième mode de fonctionnement (108), et
dans lequel, dans le premier mode de fonctionnement (106), l'équipement de protection (12) et/ou l'unité de traitement (14) sont conçus pour détecter l'événement déclencheur selon une première qualité et/ou pour mettre en oeuvre la réaction visant la sécurité, et dans le deuxième mode de fonctionnement (108) selon une deuxième qualité,
la deuxième qualité étant inférieure à la première qualité, et dans le deuxième mode de fonctionnement (108) l'équipement de protection (12) et/ou l'unité de traitement (14) peuvent fonctionner avec une puissance réduite pour faire des économies d'énergie,
**caractérisé en ce qu'**un espace de protection défini à l'intérieur duquel la fonction de sécurité est mise en oeuvre, est réglable de manière variable et comprend au moins un premier espace de protection et un deuxième espace de protection, l'équipement de protection (12) étant conçu dans le premier mode de fonctionnement (106) pour détecter l'événement déclencheur dans le premier et le deuxième espace de protection, et dans le deuxième mode de fonctionnement pour le détecter uniquement dans le premier espace de protection.

2. Dispositif selon la revendication 1, dans lequel la première qualité et la deuxième qualité sont définies par un temps de réaction et/ou une capacité de détection de l'équipement de protection et/ou de l'unité de traitement, et dans le deuxième mode de fonctionnement (108), le temps de réaction et/ou la capacité de détection sont réduits.

3. Dispositif selon la revendication 1 ou 2, dans lequel le dispositif peut fonctionner au choix dans un troisième mode de fonctionnement (110) dans lequel la détection par l'équipement de protection (12) et/ou la mise en oeuvre par l'unité de traitement (14) sont désactivées.

4. Dispositif selon l'une quelconque des revendications 1 à 3, dans lequel la puissance réduite de l'équipement de protection (12) et/ou de l'unité de traitement (14) comprend une réduction de la fréquence d'horloge, une mise hors circuit d'un ou de plusieurs noyaux de processeur, une réduction d'une vitesse de rotation de ventilateur et/ou une désactivation de modules logiciels.

5. Dispositif selon l'une quelconque des revendications 1 à 4, dans lequel l'équipement de protection (12) et/ou l'unité de traitement (14) sont réalisés à plusieurs canaux, et la puissance réduite de l'équipement de protection (12) et/ou de l'unité de traitement (14) est obtenue par la mise hors circuit d'un ou de plusieurs canaux.

6. Dispositif selon l'une quelconque des revendications 1 à 5, dans lequel le dispositif est conçu pour recevoir une instruction de commande d'un dispositif de commande séparé, et pour sélectionner le premier ou le deuxième mode de fonctionnement (106, 108) en fonction de l'instruction de commande.

7. Dispositif selon l'une quelconque des revendications 1 à 6, dans lequel le dispositif dispose de moyens pour commuter automatiquement entre le premier et le deuxième mode de fonctionnement (106, 108), en particulier dans lequel le dispositif est conçu pour signaler à d'autres équipements des informations concernant le mode de fonctionnement sélectionné.

8. Dispositif selon l'une quelconque des revendications 1 à 7, dans lequel l'équipement de protection (12) présente au moins un capteur d'imagerie (20).

9. Dispositif selon l'une quelconque des revendications 1 à 8, dans lequel l'équipement de protection (12) est conçu pour détecter en dehors d'un espace de protection défini, à l'intérieur duquel la fonction de sécurité est définie, un mouvement d'un objet et pour commuter entre le premier et le deuxième mode de fonctionnement (106, 108) en fonction de cette détection.

10. Dispositif selon l'une quelconque des revendications 1 à 9, dans lequel l'équipement de protection (12) est réalisé pour détecter une information de luminosité, et pour commuter entre le premier et le deuxième mode de fonctionnement (106, 108) en fonction de cette détection.

11. Dispositif selon l'une quelconque des revendications 1 à 10, dans lequel l'équipement de protection (12) est réalisé pour détecter un geste défini d'une personne, en particulier sans contact, et pour commuter entre le premier et le deuxième mode de fonctionnement (106, 108) en fonction de cette détection.

12. Dispositif selon l'une quelconque des revendications 1 à 11, dans lequel le dispositif est conçu pour commuter du deuxième mode de fonctionnement (108) au premier mode de fonctionnement (106) si dans le deuxième mode de fonctionnement (108) l'événement déclencheur est détecté dans le premier espace de protection.

13. Dispositif selon l'une quelconque des revendications 1 à 12, dans lequel la sélection du premier ou du deuxième mode de fonctionnement (106, 108) dépend d'un mode de fonctionnement de l'installation technique.

14. Procédé pour la mise en oeuvre économe en énergie d'une fonction de sécurité, comprenant les étapes consistant à :
- fournir un équipement de protection (12) pour détecter un événement déclencher de la fonction de sécurité, ainsi qu'une unité de traitement (14) pour mettre en oeuvre une réaction visant la sécurité de la fonction de sécurité en fonction de la détection par l'équipement de protection (12),
- faire fonctionner le dispositif au choix dans un premier mode de fonctionnement (106) et un deuxième mode de fonctionnement (108),
dans lequel dans le premier mode de fonctionnement (106), l'équipement de protection (12) et/ou l'unité de traitement (14) sont conçus pour détecter selon une première qualité l'événement déclencheur et/ou la réaction visant la sécurité, et dans le deuxième mode de fonctionnement (108) selon une deuxième qualité, et
dans lequel la deuxième qualité est inférieure à la première qualité, et dans le deuxième mode de fonctionnement (108) l'équipement de protection (12) et/ou de l'unité de traitement (14) fonctionnent avec une puissance réduite pour faire des économies d'énergie,
**caractérisé en ce qu'**un espace de protection défini à l'intérieur duquel la fonction de sécurité est mise en oeuvre, est réglable de manière variable et comprend au moins un premier espace de protection et un deuxième espace de protection, l'équipement de protection (12) étant conçu dans le premier mode de fonctionnement (106) pour détecter l'événement déclencheur dans le premier et le deuxième espace de protection, et dans le deuxième mode de fonctionnement pour le détecter uniquement dans le premier espace de protection.
